# EUROPEAN PATENT APPLICATION

(11) **EP 4 129 637 A1**
(43) Date of publication of application: **08.02.2023**
(21) Application number: 21781761.8
(22) Date of filing: 29.03.2021
(51) Int. Cl.: B29K 105/08, B29C 65/60, B29C 65/72, B29C 70/16, B29C 70/30, B29C 70/54

(54) **MEMBER FOR FRP REINFORCEMENT, METHOD FOR PRODUCING SAME, FRP MOLDED BODY AND FRP CONNECTION STRUCTURE**

(30) Priority: 30.03.2020 JP 2020073119
(71) Applicant: JON72 Co., Ltd, Kitaibaraki-city, Ibaraki 319-1725 (JP)
(72) Inventor: AOYAMA Seigi, Kitaibaraki-city, Ibaraki 3191537 (JP); SUZUKI Kimio, Kitaibaraki-city, Ibaraki 3191725 (JP); SUZUKI Masaru, Kitaibaraki-city, Ibaraki 3191725 (JP)
(74) Representative: Betten & Resch
(86) International application number: PCT/JP2021/014684
(87) International publication number: WO 2021/201298

(57) **Abstract**

[Problem] The present invention provides: a member for FRP reinforcement to be used for the purpose of suppressing the occurrence and growth of a crack in a bolted part, a rivet joined part or a bent part having an extremely small bending radius under the circumstances where there has been an increasing demand for the reduction in weight and thickness of an FRP molded body; and a method for producing this member for FRP reinforcement.

[Solution] A member for FRP reinforcement according to the present invention is used by being bonded to an FRP molded body, and is obtained by integrating a plurality of stacked fiber layers by means of a resin. This member for FRP reinforcement is characterized in that: the plurality of fiber layers include a spiral fiber layer which is formed by spirally winding fibers and two or more cloth-like fiber layers which are formed by knitting fibers in a lattice pattern; the plurality of fiber layers additionally include a spiral fiber layer which is formed by spirally winding fibers and a cloth-like fiber layer which is formed by knitting fibers in a lattice pattern, while having a configuration wherein at least two cloth-like fiber layers are stacked, with a spiral fiber layer being sandwiched therebetween; and the fibers are composed of glass fibers, carbon fibers and aramid fibers.

## Description

### FIELD OF THE INVENTION

The present invention relates to a fiber-reinforced plastic (FRP) reinforcing member and a method for producing the same, an FRP molded body, and an FRP connection structure.

### DESCRIPTION OF THE RELATED ART

FRP is a material that is lighter and stronger than a metal material, that is, a material having a high specific strength. Glass fiber-reinforced materials, carbon fiber materials, and aramid fibers are also used therein depending on the application. As FRP producing methods, there are a method of making finely-cut glass fibers dispersed uniformly, a method of infiltrating a resin into the glass fibers or carbon fibers, and the like. Thermosetting resins such as unsaturated polyester are often used for the matrix of fiber-reinforced plastics.

The FRP producing methods include a hand lay-up method, a spray-up method, an SMC (Sheet Molding Compound) press method, an RTM (Resin Transfer Molding) method using resin high-pressure injection technology using injection, an autoclave method, and the like, and these methods have been developed to the phase in which high-quality products can be manufactured.

Recently, due to changes in social infrastructure equipment, there is an increasing need for larger equipment due to changes in power generation methods such as wind power generation, and larger, thinner and lighter equipment to improve the fuel efficiency of transportation equipment for trains, automobiles, and airplanes. It is conceivable that the FRP that can cope with the increase in size will be thicker and stronger, but it is also desired to reduce the weight. Therefore, it is desired to improve the strength of an FRP main body and a connecting portion while suppressing the increase in an FRP thickness as much as possible.

The strength of the fibers constituting the FRP is high, but the strength of the resin constituting the FRP is low and cracks are likely to occur. In particular, excessive stress may be applied around a bolt-tightening hole or around a hole perforated for other purposes. In addition, even if there is no hole, there are cases where stress concentration is unavoidable due to the structure, such as when a bending radius is small, and in the worst case, cracking may occur.

When searching the patent documents published in Japan after 1974, there is found a technique (Patent Document 1 and Patent Document 2) for reinforcing an FRP structure's main body by changing a fiber structure in order to improve the strength around a bolt hole. Further, although there is no description of FRP, there is also a technique (Patent Document 3) in which a resin reinforcing sheet is attached to a bolt hole of a resin part. However, no technique has been found in which a member of the invention having a thickness of several mm or more similar to a thickness of an FRP part is attached to a bolt hole or a portion where cracking may occur, thereby suppressing the progress of cracking.

Further, Non-Patent Document 1 introduces a pasting connection method between FRP members and a bolt connection technique between the FRP members and metals. The stress analysis around the bolt has been performed partially, and Non-Patent Document 2 also reports that the compressive stress increases around the bolt hole.

In such a situation, a technique for reducing stress and a technique for suppressing the progress of cracking are required.

### CITATION LIST

### [Patent Document]

[Patent Document 1]
   JP2002-307585A
[Patent Document 2]
   JP2003-225914A
[Patent Document 3]
   JP2017-19311A

### [Non-Patent Document]

[Non-Patent Document 1]
   "FRP Molding Skills Textbook" (New Edition), The Japan Reinforced Plastics Society, October 31, 1997
[Non-Patent Document 2]
   "ADVANCED TECHNOLOGIES OF JOINING FOR FRP STRUCTURES AND FRP BONDING FOR STEEL STRUCTURES", November 12, 2013

### SUMMARY OF THE INVENTION

### PROBLEMS TO BE SOLVED BY THE INVENTION

With the increasing demand for lighter and thinner FRP molded bodies, there is a demand for a technique for suppressing the generation of cracks and the progress of cracks in bolted portions, rivet joints, bent portions having an extremely small bending radius, and the like.

It is an object of the present invention to provide an FRP reinforcing member, a method for producing the same, and an FRP connection structure, which can suppress the generation of cracks and the progress of cracks in parts with high-stress load or low strength such as bolted portions, rivet joints, or bent portions with an extremely small bending radius of FRP molded bodies.

### MEANS FOR SOLVING THE PROBLEMS

An FRP reinforcing member configured to be used by being attached to an FRP molded body according to the present invention comprises a plurality of laminated fiber layers being integrated with a resin (claim 1).

It is preferable that the plurality of fiber layers have at least one spiral fiber layer formed by arranging fibers in a spiral shape (claim 2).

Further, it is preferable that the plurality of fiber layers have two or more cloth-like fiber layers in which fibers are knitted in a lattice pattern (claim 3).

Still further, it is preferable that the plurality of fiber layers have a spiral fiber layer formed by arranging fibers in a spiral shape, and a cloth-like fiber layer in which fibers are knitted in a lattice pattern, and that at least two layers of the cloth-like fiber layer are laminated so as to sandwich the spiral fiber layer (claim 4).

Further, it is preferable that the cloth-like fiber layer is configured in such a manner that, when viewed from a laminating direction of the cloth-like fiber layers, an extending direction of fibers of a predetermined upper cloth-like fiber layer and an extending direction of fibers of a predetermined lower cloth-like fiber layer are laminated so as to intersect at an angle of 45 degrees (claim 5).

Further, it is preferable that the fibers constituting the fiber layer comprise glass fibers, carbon fibers, or aramid fibers (claim 6).

An FRP connecting structure of the present invention comprises FRP molded bodies being connected to each other or an FRP molded body and a member made of a material different from the FRP being connected to each other, by a bolt or a rivet, in which the FRP reinforcing member according to any one of claims 1 to 6 is attached to the FRP molded body so as to cover a periphery of a bolt hole or rivet hole of the FRP molded body (claim 7).

It is preferable that the member made of the material different from the FRP comprises any one of an iron-based material, a ferrite-based stainless steel material, an austenite-based stainless steel material, an aluminum alloy-based material, and a magnesium alloy-based material (Claim 8).

An FRP molded body of the present invention comprises a recess or a hole formed on a surface, in which the FRP reinforcing member according to any one of claims 1 to 6 is mounted to the FRP molded body so as to cover an opening of the recess or the hole (claim 9).

An FRP reinforcing member producing method of the present invention comprises a step of charging a plurality of fiber layers composed of glass fibers, carbon fibers, or aramid fibers and a resin into a mold, a step of pressing the plurality of fiber layers and the resin at 300 °C or less for 60 minutes or less, and a step of removing a load pressure, cooling, and then demolding after the pressing step (claim 10).

### EFFECTS OF THE INVENTION

According to the FRP reinforcing member, its producing method, the FRP molded body, and the FRP connection structure of the present invention, it is possible to suppress the generation of cracks and the progress of cracks in parts with high-stress load or low strength such as bolted portions, rivet joints, or bent portions with an extremely small bending radius of FRP molded bodies.

### BRIEF DESCRIPTION OF THE DRAWINGS

FIG. 1 is a crack model diagram of an FRP molded body having a bolt hole.
FIG. 2 shows examples of constituent elements of an FRP reinforcing member (hereinafter referred to as "patch") of the present invention and configuration examples of composite patches.
FIG. 3 shows a design example in which the FRP molded body is connected to a metal structural member 19 by bolt tightening using a patch 12.
FIG. 4 shows a design example in which the FRP molded body is connected to the metal structural member 19 by bolt tightening using the patch 12, and an upper part of the bolt is accommodated in a recess on a surface of the FRP molded body.
FIG. 5 shows a design example in which two FRP molded bodies are connected by bolt tightening using two patches 12.
FIG. 6 shows design examples in which a flat FRP molded body and a recessed FRP molded body are connected to each other by bolt tightening using patches 4, 5, and 12.
FIGS. 7A and 7B show design examples in which a flat FRP molded body and a recessed FRP molded body are connected to each other by bolt tightening using patches 5 and 12, wherein

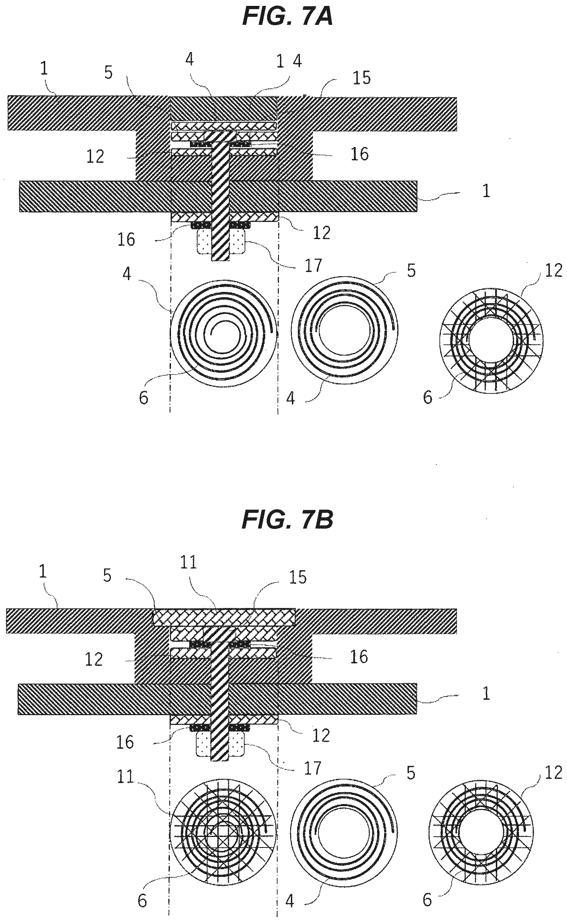

FIG. 7A shows a configuration example in which a recess is filled with a resin, and FIG. 7B is a configuration example in which an opening of the recess is covered with a patch 11. A surface of the FRP molded body is designed to be smooth.

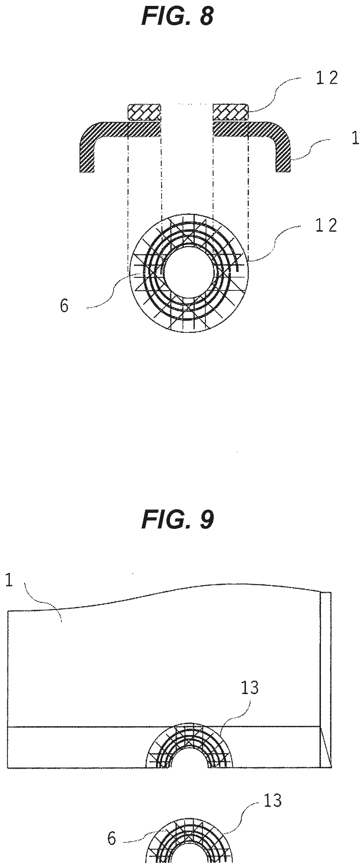

FIG. 8 shows a design example in which the patch 12 is attached to an opening of a convex FRP molded body.
FIG. 9 shows a design example in which the patch 13 is attached to a partial recess formed in the FRP molded body.

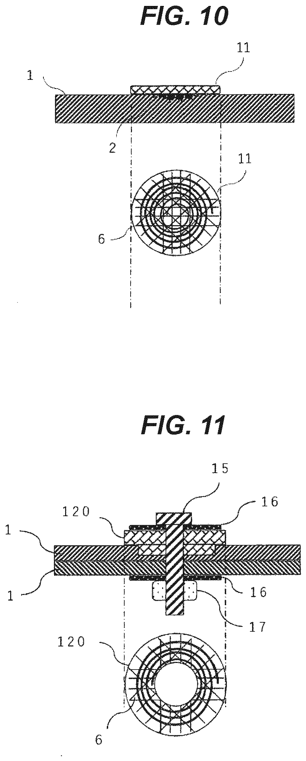

FIG. 10 shows a design example in which a patch 11 (with no hole) is attached on a partial crack generated on a surface of an FRP molded body.
FIG. 11 shows a design example in which two FRP molded bodies are connected to each other by bolt tightening using an integrated irregular-shaped patch 120 in which perforated disk-shaped patches are stacked in two layers in order to increase the shear strength of the patch.

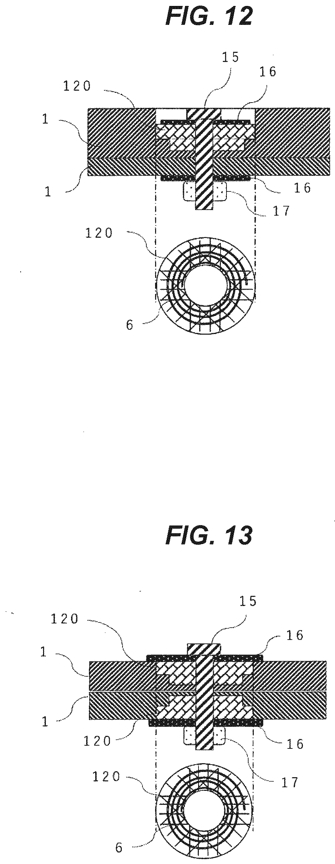

FIG. 12 shows a design example in which two FRP molded bodies are connected to each other by bolt tightening using the integrated irregular-shaped patch 120, and an upper part of the bolt is accommodated in a recess on a surface of the FRP molded body.
FIG. 13 shows a design example in which two FRP molded bodies are connected to each other by bolt tightening with integrated irregular-shaped patches 120 being arranged on both a bolt side and a nut side.

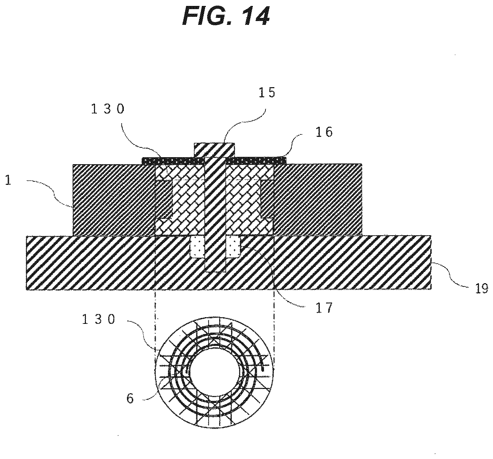

FIG. 14 shows a design example of a bolt tightening structure configured to be connected to the metal structural member 19, and an integrated irregular-shaped patch 130 having perforated disk-shaped patches stacked in three layers is used in order to increase the shear strength of the patch.

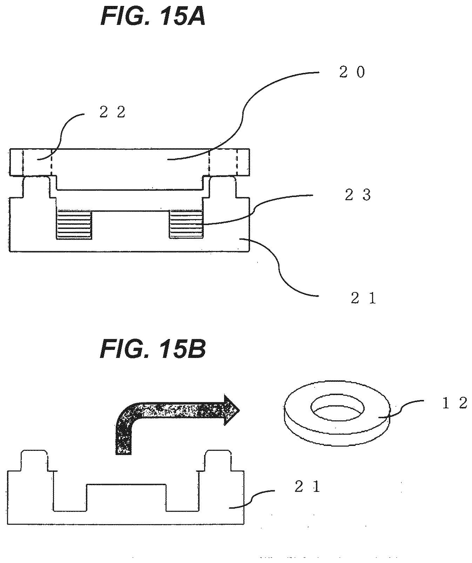

FIG 15A and 15B are explanatory diagrams illustrating a patch producing process, wherein FIG. 15A shows a step of press molding and FIG. 15B shows a step of taking-out the patch.

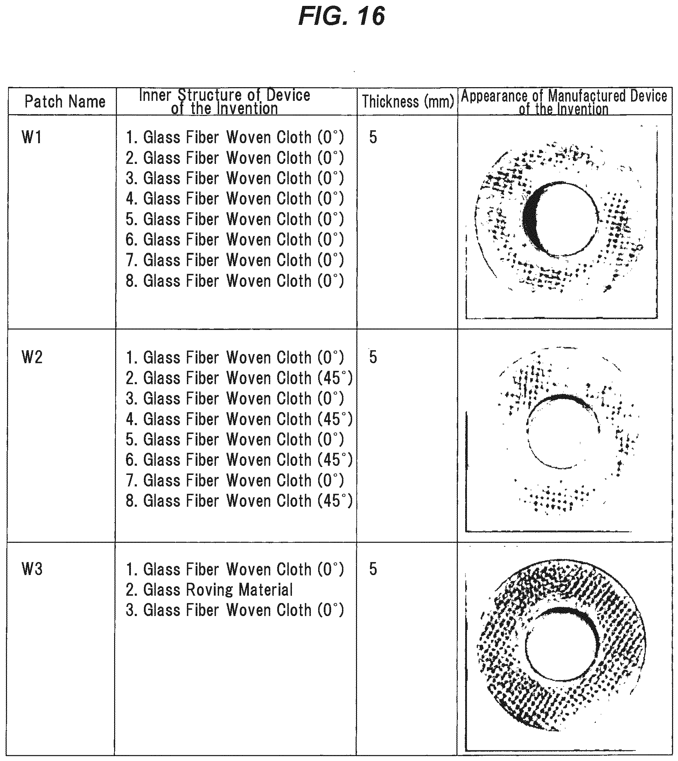

FIG. 16 shows the inner structures and appearances of the patches W1 to W3 according to the embodiment of the present invention.

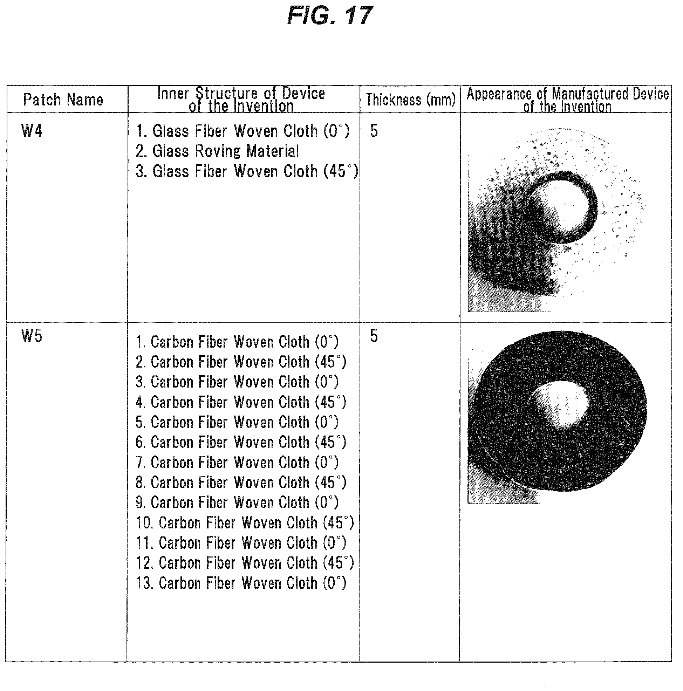

FIG. 17 shows the inner structures and appearances of the patches W4 to W5 according to the embodiment of the present invention.

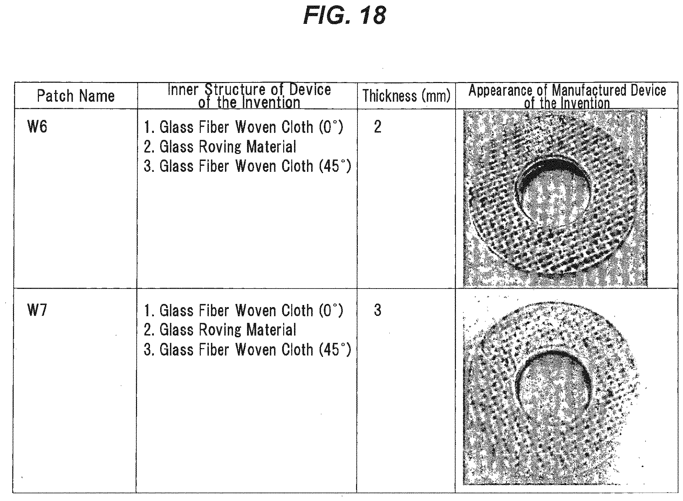

FIG. 18 shows the inner structures and appearances of the patches W6 to W7 according to the embodiment of the present invention.

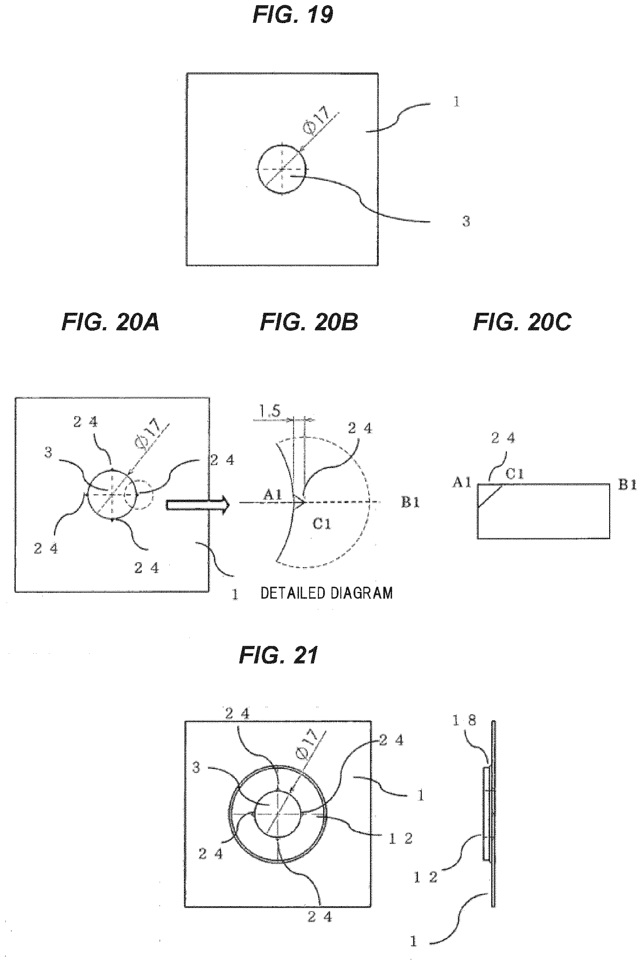

FIG. 19 is a top view showing an example of a perforated FRP plate.
FIGS. 20A to 20C show an example of a perforated FRP plate with artificial cracking, wherein FIG. 20A is a top view, FIG. 20B is an enlarged view of an artificial cracked portion, and FIG. 20C is an explanatory diagram showing the depth of the artificial cracked portion in the cross-section along A1-C1-B 1.
FIG. 21 is a configuration diagram of a test piece in which a patch is attached to a perforated FRP plate with artificial cracking for a crack growth acceleration test.

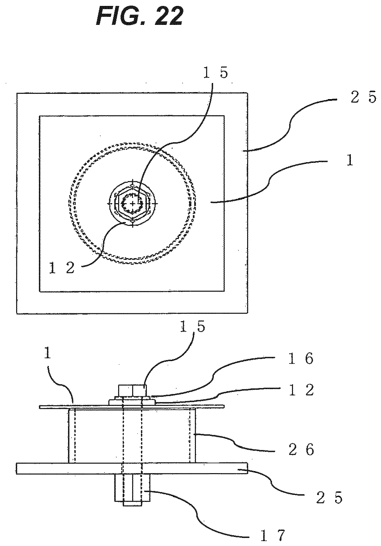

FIG. 22 is a configuration diagram showing the structure of a crack growth acceleration test equipment by bolt tightening.

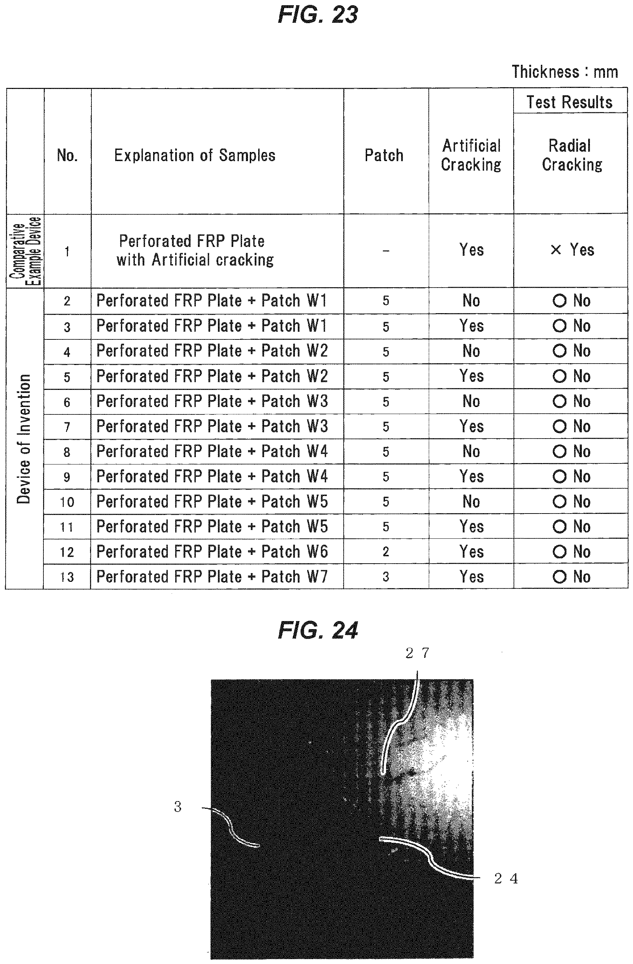

FIG. 23 shows a test result of the crack growth prevention effect of the patch according to the embodiment of the present invention.
FIG. 24 is an explanatory diagram showing radial cracking generated by the crack growth acceleration test.

### MODE FOR CARRYING OUT THE INVENTION

The FRP molded body is often used in such a manner that the FRP molded bodies are connected to each other or that the FRP molded body is connected to other materials. Also, the shape of the FRP molded body is often complicated depending on the application. For example, some FRP molded bodies are used under stress due to their complicated structure such as crimped parts by bolts and nuts or rivets.

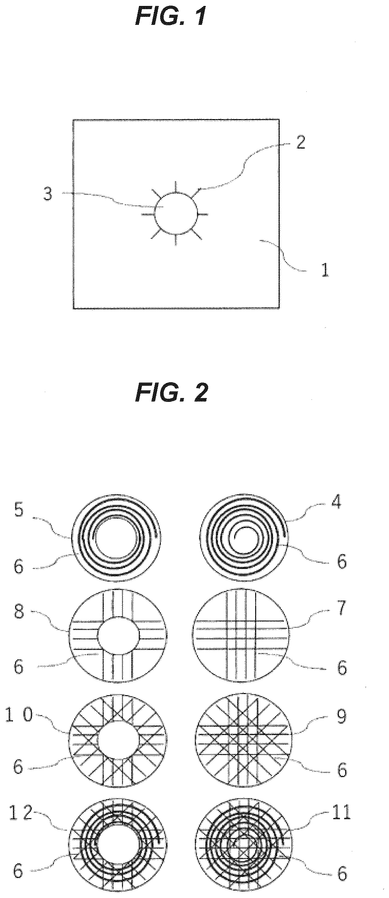

FIG. 1 is a crack model diagram of a surface of an FRP molded body having a bolt hole. The surface crack is assumed to be radial cracking extending radially from a hole 3 of an FRP molded body 1 in its radial direction. To prevent crack propagation, it is conceivable to arrange fibers at right angles to cracks so as to resist cracking.

FIG. 2 shows design examples of typical patches in which the composition of the fiber is changed and the resin is impregnated in order to prevent the growth of radial cracking. The material of the fiber is glass fiber, carbon fiber, or aramid fiber. The designed patterns are as follows.
- 4: Patch 4 (Spiral (i.e., swirl), non-perforated (i.e., without holes))
- 5: Patch 5 (Spiral, perforated (i.e., with a hole))
- 7: Patch 7 (Fiber cloth, non-perforated)
- 8: Patch 8 (Fiber cloth, perforated)
- 9: Patch 9 (Fiber cloth, fiber cloth 45 degrees, non-perforated)
- 10: Patch 10 (Fiber cloth, fiber cloth 45 degrees, perforated)
- 11: Patch 11 (Fiber cloth, spiral, fiber cloth 45 degrees, non-perforated)
- 12: Patch 12 (Fiber cloth, spiral, fiber cloth 45 degrees, perforated)
- 13: Patch 13 (Half-split members of the patch 11)

Here, the "fiber cloth 45 degrees" of the above patches 9 to 12 means a fiber cloth rotated 45 degrees with respect to the "fiber cloth" about the center of the patch. That is, "45 degrees" of "fiber cloth 45 degrees" means that an extending direction of the fibers of the "fiber cloth 45 degrees" intersects at an angle of 45 degrees with an extending direction of the fibers of the "fiber cloth" when the patch is viewed from a laminating direction (i.e., stacking direction) of the fiber layers.

The patch can be used as a single layer or a plurality of laminated layers, and be connected to the FRP molded body 1 with an adhesive or the like. Further, as will be described later, it is also possible to use an integrated irregular-shaped patch in which two disc-shaped patches ensuring excellent shear strength of the attached parts are laminated (i.e., stacked), which has further improved the strength of the attached parts by means of the patch, which has evolved the performance of the patch.

Further, in the crack growth acceleration test to be described later, samples were made using a transparent resin so that the fibers inside the patch could be observed, but a resin with white or black or other various colors may be used.

Further, when using the patch of the present invention, it is possible to select the use or non-use of a washer as necessary, particularly regarding bolt tightening. Regarding the production of the patch of the present invention, it is also possible to use other production techniques such as three-dimensional printer molding.

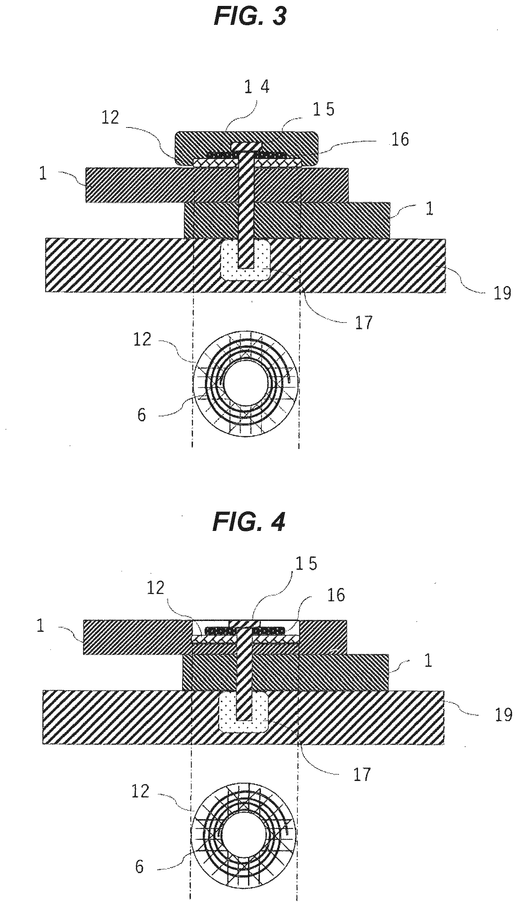

FIG. 3 shows a structure in which the patch 12 is used. There is shown a composite type three-layer perforated patch comprising a spiral glass fiber being sandwiched between a fiber cloth including fibers woven vertically and horizontally and another fiber cloth which is rotated 45 degrees around the center of the hole, and being impregnated with a resin. Bolt tightening is performed together with a nut 17 installed in a metal structural member 19. This is an example of a structure in which a bolt appears on the FRP molded body 1. As the metal structural member 19, iron-based materials, ferrite-based stainless steel materials, austenite-based stainless steel materials, aluminum alloy-based materials, and magnesium alloy-based materials can be adopted. In order to prevent corrosion of the metal structural member 19, it may be sealed with a resin 14 as designed.

Here, the spiral glass fiber and the glass fiber cloth will be described. The spiral glass fiber is formed by winding a fiber made of untwisted glass roving in which strands are aligned in a spiral shape (i.e., swirl shape) with a radius larger than a diameter of a bolt hole or a rivet hole. The glass fiber cloth is a plain weave of yarns in which a plurality of single yarns each composed of a twisted strand are aligned. Both are used as reinforcing members for composite materials such as plastics.

As the glass roving material used in the examples to be described later, the count ER2310 specified in JIS3410 was used. As the glass fiber cloth, the count 200 specified in JISR3416 was used.

FIG. 4 shows an example of a structure in which the bolt does not appear on the FRP molded body 1 using the patch 12. Bolt tightening is performed together with the nut 17 installed in the metal structural member 19. By smoothing the surface of the FRP molded body, it is intended to suppress the turbulence of the liquid phase or the gas phase. In the following designs, the surface smoothing technique is easy to use from the viewpoint of preventing scratches and the like.

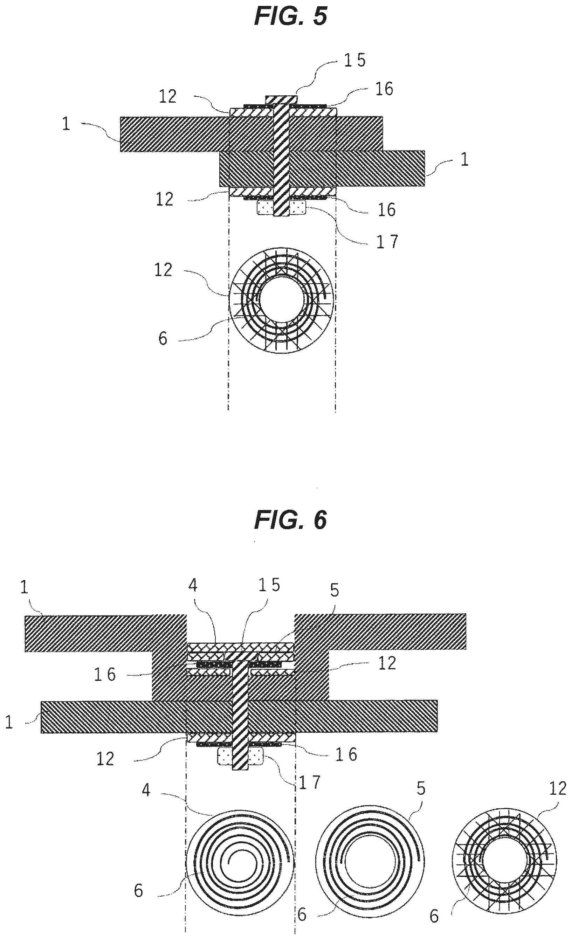

FIG. 5 shows a design example in which two patches 12 are used on the front and back surfaces of the joint portion in order to join the two FRP molded bodies 1. Bolt tightening is performed by connecting the bolt 15 and the nut 17.

FIG. 6 shows design examples in which two types of FRP molded bodies 1 having different shapes are combined. These are design examples using a patch 4, a patch 5, and a patch 12. They are designed to be combined with the bolt 15 and the nut 17. The head of the metal bolt is located in an FRP recess.

FIGS. 7A and 7B show design examples in which a recessed FRP molded body is combined, wherein FIG. 7A shows a resin being inserted into a recess, and FIG. 7B shows the patch being inserted and attached into the recess.

FIG. 7A shows a design example in which two types of FRP molded bodies 1 having different shapes are combined, and the resin 14 is arranged in the recess and the surface of the FRP molded body is designed to be smooth. The structure is configured in such a manner that the patch 4, the patch 5, and the patch 12 are used. They are combined by the bolt 15 and the nut 17.

FIG. 7B shows a design example in which two types of FRP molded bodies 1 having different shapes are combined, and the patch 11, the patch 5, and the patch 12 are arranged in the recess and the surface of the FRP molded body is designed to be smooth. The structure is configured in such a manner that the patch 11, the patch 5, and the patch 12 are used. They are combined by the bolt 15 and the nut 17.

FIG. 8 shows a design example in which the patch 12 is used when the FRP molded body 1 is convex.

FIG. 9 shows an example of applying the patch to the case where the FRP molded body 1 has a partially recessed structure, and the patch 13 which is a half split member of the patch 11.

FIG. 10 shows a design example to which the patch 11 is applied. This is a design example using the non-perforated patch 11 in order to suppress the radial cracking when the FRP molded body 1 has partial cracks.

FIG. 11 shows an example in which two FRP molded bodies are combined. This case is a design example using a first integrated irregular-shaped patch 120 in which two perforated disk-shaped patches are laminated in order to increase the shear strength of the patch. Since a part of the integrated irregular-shaped patch is embedded in a main body of the FRP molded body 1, it has a structure that shows strong resistance to the shearing force.

FIG. 12 shows an example in which two FRP molded bodies are connected to each other. This case is a design example using the first integrated irregular-shaped patch 120 in which the two perforated disk-shaped patches are laminated in order to increase the shear strength of the attached parts by the patch, and the structure is configured in such a manner that the bolt does not come out from the surface.

FIG. 13 shows an example in which two FRP molded bodies are connected. This case is a design example using the first integrated irregular-shaped patch 120, in which the two disc-shaped patches each having two perforated disks being laminated are used, in order to increase the shear strength of the attached parts by using the patch. This case is an example of arranging the patches on the front and back sides, to provide a more reinforced structure.

FIG. 14 shows a design example of a bolt tightening structure configured to be connected to the metal structural member 19. This case is a design example using a second integrated irregular-shaped patch 130 having a shape in which three perforated disks are laminated in order to increase the shear strength of the attached parts by using the patch. The integrated irregular-shaped patch used here can be manufactured by the producing method described in the present patent application. It is possible to manufacture a reinforced FRP by FRP vacuum infusion process (VPI (Vacuum Press Infusion) process) and install the manufactured integrated irregular-shaped patch in advance inside the molded body. In such an application, it is possible to use the second integrated irregular-shaped patch in which three disc-shaped patches made of a soft resin such as polypropylene or nylon are laminated instead of using patches made of FRP because the structure around the hole is constrained.

As a method of producing the patch structure shown in FIGS. 11 to 14, the method may be performed by attaching the FRP reinforcing member to the FRP molded body, then adjusting the shape by cutting the two members in such a manner that the bolt hole is penetrated therethrough, and attaching another FRP reinforcing member including a bolt portion to provide a connection structure.

It is also possible to bond the molded patches together to form a composite patch. An adhesive may be attached to each of the composite patches to produce and use the patch composite body. Considering industrial use, it is preferable to use an integrally molded irregular-shaped patch in which two disc-shaped patches are laminated from the viewpoint of easiness of use.

For the strong adhesion of these members, an instant adhesive, an epoxy-based adhesive, or an acrylic-based adhesive can be used. For the adhesion between the patches, an instant adhesive, an epoxy-based adhesive, or an acrylic-based adhesive can be used. Further, a strong adhesive double-sided tape may be used.

### [Example]

In society, the industrial reliability of FRP products is important. A crack generation prevention technique is desired for a part subjected to a high-stress load or a part having a low strength such as bolted portions, rivet joints, or bent portions having an extremely small bending radius. Therefore, the patch of the present invention has been developed by the Inventors. Although the shape of this patch is flat and disk-shaped (perforated or non-perforated in the center) in Examples to be described later, if necessary, it can be flexibly formed, designed, and produced into a square, a rectangle, a pentagon, other polygons, or an irregular shape. There are many possible ways to make a patch, but an easy-to-make method was carried out in the present specification. Hereinafter, the method carried out and examples of the produced patch will be described. The following examples were designed in such a manner that the weight ratio of the resin and the fiber is 7:3.

FIGS. 15A and 15B show an example of a state of press molding and a step of taking out the patch in the patch producing method of the present invention. In FIG. 15A, 20 denotes an upper mold for pressing a material (fiber cloth made of resin and glass fiber or carbon fiber) 23, 21 denotes a lower mold, and 22 denotes an axial alignment hole. In FIG. 15B, 12 denotes the patch taken out from the molds (i.e., demolded) after the press molding.

Next, the producing method of the patch will be described. First, polypropylene and glass fibers or carbon fibers are prepared, and they are put into the lower mold 21 in order. In that case, a reinforcing material made of polypropylene and glass fibers or carbon fibers is arranged in a predetermined combination so as to have the designed structure, and pressed and held under the stress of 1.7 kgf/mm² (load 907 kgf/530 mm²) at 230 °C for 15 minutes. Thereafter, the load stress is removed, then cooled, and the patch 12 having a diameter of about 5 mm is demolded as a product.

An example in which the patch of the present invention is applied to an FRP molded body or an FRP connection structure is shown below.

FIG. 16 shows the inner structures and appearances of the products of the invention, each of which is a 5 mm thick patch.

It was possible to produce practical patches without defects such as a cavity in all the patches W1 to W3.

The patch W1 can be manufactured from eight glass fiber cloths (0°) (0°: fiber cloth rotation angle 0°) and polypropylene. Each glass fiber cloth to be laminated is not rotated.

The patch W2 is composed of eight glass fiber cloths (0°) shifted by 45 degrees (45°) (45°: fiber cloth rotation angle 45°) and is made of these glass fiber cloths and polypropylene. The patch W3 shows a patch made of a glass fiber cloth (0°), a spiral (swirl) glass fiber using a glass roving material, a glass fiber cloth (0°), and polypropylene.

FIG. 17 shows the inner structures and appearances of the products of the invention, each of which is a 5 mm thick patch.

It was possible to produce practical patches without defects such as a cavity in all the patches W4 to W5.

The patch W4 shows a patch made of a glass fiber cloth (0°), a spiral glass fiber using a glass roving material, a glass fiber cloth (45°), and polypropylene.

The patch W5 is composed of thirteen carbon fiber cloths (0°) shifted by 45 degrees (45°) (45°: fiber cloth rotation angle 45°) and is made of these carbon fiber cloths and polypropylene.

FIG. 18 shows photographic images of the products of the invention of a 2 mm-thick patch W6 and a 3 mm-thick patch W7 which were manufactured to have the same structure as the inner structure of the 5 mm-thick patch W4, which is a product of the invention, in order to investigate the effect of the thickness. It was possible to produce practical patches without defects such as a cavity in all the patches W6 to W7.

FIGS. 19 to 22 are explanatory diagrams showing that a crack growth acceleration test was performed under a large bending strain condition using samples in each of which artificial cracking was made in a prepared patch. These explanatory diagrams describe the shape of the samples manufactured for evaluating the performance and the testing machine manufactured for the test evaluation.

FIG. 19 shows a perforated FRP plate having a thickness of 3 mm. The diameter of the center hole is 17 mm.

FIG. 20 shows a state of a perforated FRP plate having artificial cracking. Assuming that micro cracks were present during hole drilling, artificial cracking (crack length 1.5 mm) was applied to the hole notched portion, and the crack growth acceleration test was performed.

FIG. 20A is an overall view of a perforated FRP plate having artificial cracking. FIG. 20B is an enlarged view of the artificial cracked portion of FIG. 20A, in which the cracked portion 24 is enlarged. FIG. 20C shows a cross-section of an artificial crack when cut in the cross-section along A1-C1-B1 in the enlarged view of FIG. 20B, and the artificial crack shape is substantially triangular. C1 is the tip position of the artificial crack.

FIG. 21 is a configuration diagram of a test piece in which a patch is attached to a perforated FRP plate (with artificial cracking in the figure). In all the test pieces, the trade name "grasp-neo", which is a commercially available adhesive, was used to bond the patch and the FRP plate.

FIG. 22 shows an equipment structure for performing the crack growth acceleration test by bolt tightening, and a jig for a bolt tightening evaluation test and a tightening situation.

The crack growth acceleration test was performed as follows. A hexagon bolt was gradually tightened and a load was applied continuously up to 10 N·m with a torque wrench. This load was constant in all tests. The rotation speed was about 4 rps.

FIG. 23 shows a verification result of the crack prevention effect of the patch of the invention. This is a summary of the evaluation results of the crack progress prevention effect of the crack prevention patch.

First, the test was conducted using a perforated FRP plate having artificial cracking without attaching a patch. As a result, as shown in FIG. 24, in the FRP molded body 1 without a patch shown as a comparative product, it can be seen that radial cracking 27 is generated from the vicinity of the artificial cracking 24 around the FRP hole.

Next, using the 5 mm-thick patches W1 to W5 of the invention, the crack growth acceleration test was conducted with and without artificial cracking for comparison. As a result, no crack progress was observed in the patch on the appearance of any of the samples. Therefore, it was found that the progress of cracking was suppressed. Among the patches of the invention, the patch W4 seemed to be easy to use because of its economic efficiency and ease of handling. Further, it is considered that the thicker the patch, the higher the strength, and the thinner the patch, the weaker the patch. As a result, no crack progress was observed in the patch even under severe conditions of thin thickness, that is, for the patches having thicknesses of 3 mm and 2 mm. Therefore, from these results, the crack prevention effect was confirmed with the patches of the invention.

### [Industrial Applicability]

The FRP reinforcing member and its producing method, the FRP molded body, and the FRP connection structure of the present invention can be applied to lightweight small airplanes, air conditioning equipment, industrial/nursing robots, trucks, passenger cars, train parts, parts of installations for wind power generation, housings for medical equipment, large drones, and other FRP housings and FRP parts.

### Code description

- 1: FRP molded body
- 2: Model with radial cracking
- 3: Hole
- 4: Patch (spiral, non-perforated)
- 5: Patch (spiral, perforated)
- 6: Glass fiber or carbon fiber
- 7: Patch (fiber cloth, non-perforated)
- 8: Patch (fiber cloth, perforated)
- 9: Patch (fiber cloth, fiber cloth 45 degrees, non-perforated)
- 10: Patch (fiber cloth, fiber cloth 45 degrees, perforated)
- 11: Patch (fiber cloth, spiral, fiber cloth 45 degrees, non-perforated)
- 12: Patch (fiber cloth, spiral, fiber cloth 45 degrees, perforated)
- 13: Patch (half split member of patch 12)
- 14: Resin
- 15: Bolt
- 16: Washer
- 17: Nut
- 18: Adhesive
- 19: Metal structural member
- 20: Upper mold
- 21: Lower mold
- 22: Axial alignment hole
- 23: Woven cloth of resin and glass fiber or carbon fiber
- 24: Artificial crack
- 25: Flat plate test jig
- 26: Cylindrical test jig
- 27: Radial cracking
- 120: First irregular-shaped patch
- 130: Second irregular-shaped patch

## Claims

1. An FRP reinforcing member configured to be used by being attached to an FRP molded body, comprising:
a plurality of laminated fiber layers being integrated with a resin.

2. The FRP reinforcing member according to claim 1, wherein the plurality of fiber layers have at least one spiral fiber layer formed by arranging fibers in a spiral shape.

3. The FRP reinforcing member according to claim 1, wherein the plurality of fiber layers have two or more cloth-like fiber layers in which fibers are knitted in a lattice pattern.

4. The FRP reinforcing member according to claim 1, wherein the plurality of fiber layers have a spiral fiber layer formed by arranging fibers in a spiral shape, and a cloth-like fiber layer in which fibers are knitted in a lattice pattern, wherein at least two layers of the cloth-like fiber layer are laminated so as to sandwich the spiral fiber layer.

5. The FRP reinforcing member according to claim 3 or 4, wherein, when viewed from a laminating direction of the cloth-like fiber layers, an extending direction of fibers of a predetermined upper cloth-like fiber layer and an extending direction of fibers of a predetermined lower cloth-like fiber layer are laminated so as to intersect at an angle of 45 degrees.

6. The FRP reinforcing member according to any one of claims 1 to 5, wherein the fibers constituting the fiber layer comprise glass fibers, carbon fibers, or aramid fibers.

7. An FRP connecting structure, comprising FRP molded bodies being connected to each other or an FRP molded body and a member made of a material different from the FRP being connected to each other, by a bolt or a rivet, wherein the FRP reinforcing member according to any one of claims 1 to 6 is attached to the FRP molded body so as to cover a periphery of a bolt hole or a rivet hole of the FRP molded body.

8. The FRP connecting structure according to claim 7, wherein the member made of the material different from the FRP comprises any one of an iron-based material, a ferrite-based stainless steel material, an austenite-based stainless steel material, an aluminum alloy-based material, and a magnesium alloy-based material.

9. An FRP molded body comprising:
a recess or a hole formed on a surface,
wherein the FRP reinforcing member according to any one of claims 1 to 6 is mounted to the FRP molded body so as to cover an opening of the recess or the hole.

10. An FRP reinforcing member producing method comprising:
a step of charging a plurality of fiber layers composed of glass fibers, carbon fibers, or aramid fibers and a resin into a mold;
a step of pressing the plurality of fiber layers and the resin at 300 °C or less for 60 minutes or less; and
a step of removing a load pressure, cooling, and then demolding after the pressing step.
